# EUROPÄISCHE PATENTSCHRIFT

(11) **EP 2 499 037 B1**
(45) Veröffentlichungstag und Bekanntmachung des Hinweises auf die Patenterteilung: **03.09.2014**
(21) Anmeldenummer: 10768177.7
(22) Anmeldetag: 22.09.2010
(51) Int. Cl.: B62D 5/04, F16H 57/02

(54) **ELEKTROMECHANISCHE SERVOLENKUNG MIT KORROSIONSSCHUTZ**
ANTI-CORROSION ELECTROMECHANICAL POWER STEERING
DIRECTION ASSISTÉE ÉLECTROMÉCANIQUE DOTÉE D'UNE PROTECTION ANTICORROSION

(30) Priorität: 13.11.2009 DE 102009052822
(43) Veröffentlichungstag der Anmeldung: 19.09.2012
(73) Patentinhaber: ThyssenKrupp Presta AG, 9492 Eschen (LI)
(72) Erfinder: ROMBOLD, Manfred, 71364 Winnenden (DE); LUBOJATZKY, Thomas, 70565 Stuttgart (DE)
(74) Vertreter: Lenzing Gerber Stute
(86) Internationale Anmeldenummer: PCT/EP2010/005790
(87) Internationale Veröffentlichungsnummer: WO 2011/057690

(56) Entgegenhaltungen:
- WO-A1-2006/100261
- WO-A1-2008/125282
- JP-A- 2005 068 316
- US-A1- 2007 138 031

## Beschreibung

Die vorliegende Erfindung betrifft eine elektromechanische Lenkung mit den Merkmalen des Oberbegriffs des Anspruchs 1.

Derartige Lenkungen sind allgemein bekannt. Während bei hydraulischen Servolenkungen der Hilfsantrieb über ein Kolben/Zylinderaggregat und Hydraulikfluid erfolgt, weisen elektromechanische Steer-by-Wire-Lenkungen und Servolenkungen im allgemeinen Drehmoment-und Winkelsensoren auf, die zur Ansteuerung eines elektrischen Antriebsmotors ausgewertet werden. Der Servomotor treibt in den verschiedenen Bauformen die Lenksäule, das Lenkritzel oder die Zahnstange einer mechanischen Lenkung an. Hierfür werden Reduziergetriebe wie z. B. Zahnriementriebe, Kugelumlaufgetriebe, oder Stirnrädergetriebe verwendet.

Im Unterschied zu den herkömmlichen hydraulischen Servolenkungen, bei denen ein Korrosionsschutz durch das Hydraulikfluid und durch Fetten der Oberflächen erfolgt, muss das Innere einer elektromechanischen Servolenkung besonders gegen Korrosion geschützt werden. Hierbei ist es schwierig, sowohl die mechanischen Komponenten als auch die elektronischen Komponenten, soweit diese im Innenraum des Lenkgetriebes oder des Servoantriebs angeordnet sind, gegenüber Wasserdampf und schwefel- oder chlorhaltigen Gasen zu schützen. Aus dem Stand der Technik ist es bekannt, den Ölfüllungen von Getrieben oder Hydrauliksystemen einen Korrosionsinhibitor zuzusetzen, wie dies beispielsweise in der Patentschrift US 7,014,694 B1 beschrieben ist.

In der verpackungstechnik werden für einen temporären Korrosionsschutz innerhalb einer Umverpackung verpackungspapier oder andere Trägermaterialien mit einem in der Dampfphase wirkenden Korrosionsinhibitor versehen und in die Verpackung gegeben. Der Korrosionsschutz wirkt dann bis zum Öffnen der Verpackung, also während des Transports und der Lagerung. Solche Korrosionsinhibitoren sind unter dem Kürzel VCI oder VpCI (Vapor phase corrosion inhibitor) bekannt, beispielsweise aus dem Patent US 4,973,448.

Im Gegensatz dazu wird der Korrosionsschutz in elektromechanischen Lenkungen bislang sehr aufwendig vorgenommen und zwar durch Beschichten, Fetten und Konservieren. Je nach Art der verwendeten Bauteile werden innerhalb einer Lenkung unterschiedliche Korrosionsschutzverfahren angewendet. Dies ist in der Praxis sehr aufwendig.

JP 2005 068316 A offenbart die Merkmale des Oberbegriffs des Anspruchs 1.

Beispielsweise auf der Internetseite http://texastechnologies.com werden Korrosionsprodukte unter der Typenbezeichnung VCI-101 und VCI-110 angeboten. Es handelt sich um selbstklebend ausgerüstete Depots von VCI-Materialien. Der Korrosionsinhibitor ist dabei in einem schwammartigen Material gespeichert und wird durch eine atmungsaktive Membran abgegeben. Diese Vorrichtungen werden beispielsweise in Schaltschränken und elektrischen Anlagen eingesetzt, die einer korrosiven Atmosphäre ausgesetzt sind. Sie müssen nach etwa zwei Jahren ausgetauscht werden. Solche zusätzlichen Komponenten können nicht in elektromechanischen Aggregaten verwendet werden, die normalerweise über die gesamte Betriebsdauer nicht geöffnet werden.

Es ist deshalb Aufgabe der vorliegenden Erfindung, eine elektromechanische Lenkung zu schaffen, die in einfacher Weise und ohne zusätzliche Komponenten oder mit geringem zusätzlichen Aufwand gegen Korrosion geschützt ist.

Diese Aufgabe wird von einer Lenkung mit den Merkmalen des Anspruchs 1 gelöst.

Weil im Innenraum der Lenkung ein Kunststoff-Spritzgussteil vorgesehen ist, das mit einem VCI-Material ausgestattet ist, kann dieses Spritzgussteil in herkömmlicher Weise in der Lenkung verwendet werden. Es handelt sich um ein einfaches zusätzliches Bauteil, oder auch um eine an sich vorhandene Komponente, die speziell ausgeführt ist. Diese Komponente kann während der Betriebsdauer kontinuierlich das VCI-Material an die Atmosphäre im Inneren der Lenkung abgeben. Es werden Standzeiten für den Korrosionsschutz von 10 Jahren und mehr erwartet.

Besonders bevorzugt kann eine Kunststoffhülse, die als Distanzstück oder Befestigungselement wirkt, mit dem VCI-Material ausgestattet sein. Es kann auch vorgesehen sein, dass das VCI-Material in Unterlegscheiben oder Passstücken eingearbeitet ist. Schließlich können selbst funktionswesentliche Elemente mit dem VCI-Material ausgestattet sein, wie zum Beispiel Lagerschalen von Kugelgelenken für die Spurstangenanlenkung, Grundplatten für die Sensormontage und dergleichen.

Nachfolgend werden zwei Ausführungsbeispiele der vorliegenden Erfindung anhand der Zeichnungen beschrieben. Es zeigen:
- Fig. 1:: den Ritzelbereich einer elektrischen Servolenkung mit einer Kunststoffhülse zum Korrosionsschutz; sowie
- Fig. 2:: den Bereich einer Faltenbalganbindung eines Lenkgetriebes mit einem eingesetzten Korrosionsschutzring.

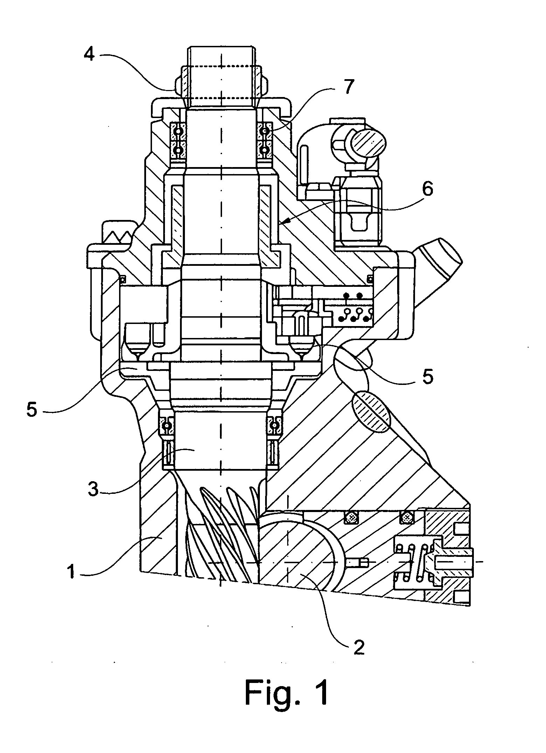

In der Figur 1 ist ein Querschnitt durch eine elektromechanische Servolenkung von der Bauart einer Zahnstangenlenkung dargestellt. Der Querschnitt liegt im Bereich des Ritzelgehäuses der Zahnstangenlenkung. Die Figur 1 zeigt das Lenkungsgehäuse 1 mit der darin senkrecht zur Zeichenebene axial verschieblich gelagerten Zahnstange 2 und einen mit der Zahnstange 2 kämmenden Ritzel 3. Das Ritzel 3 wird von einer Lenkspindel 4 angetrieben, wobei zwischen der Lenkspindel 4 und dem Ritzel 3 ein nicht dargestellter Torsionsstab vorgesehen ist. Die Verdrehung der Lenkspindel 4 gegenüber dem Lenkritzel 3 gegen die Rückstellkraft des Torsionsstabes wird in einem Drehmomentsensor 5 erfasst und zur Steuerung der elektrischen Servolenkung verwendet. Eine auf die Lenkspindel 4 innerhalb des Lenkungsgehäuses 1 aufgesetzte Kunststoffbuchse 6 ist mit einem VCI-Material versehen. Die Kunststoffbuchse 6 ist auf die Lenkspindel 4 aufgepresst und dort drehfest und unverschieblich gehalten. Da diese Buchse jedoch mechanisch nicht belastet ist, sind hier keine besonderen Anforderungen zu stellen. Der Innenraum des Lenkgetriebes 1 ist an der Seite der Lenkspindel durch einen Wellendichtring 7 und in anderen Bereichen entsprechend gegenüber der Atmosphäre abgedichtet.

Das in der Buchse 6 enthaltene VCI-Material kann in den Innenraum des Lenkungsgehäuses 1 abgegeben werden, so dass dort in bekannter Weise eine Korrosionsschutzatmosphäre entsteht. Diese Korrosionsschutzatmosphäre schützt sowohl die mechanischen Komponenten, also das Ritzel 3, die Zahnstange 2 und die Lenkspindel 4 sowie die weiteren nicht dargestellten Bauelemente, als auch die Elektronikkomponenten, die im Drehmomentsensor 5 und eventuell anderen Sensoren vorhanden sind. Die Buchse 6 ist dabei ein einfaches Spritzgussteil, bei dessen Herstellung das VCI-Material mitverarbeitet wurde. Auch an den Sitz der Buchse 6 sind keine besonderen Anforderungen zu stellen. Allein durch ihre Anordnung auf der Lenkspindel 4 ist bereits ausgeschlossen, dass dieses Bauelement sich innerhalb des Lenkungsgehäuses 1 verlagern und dadurch zu Störungen führen könnte.

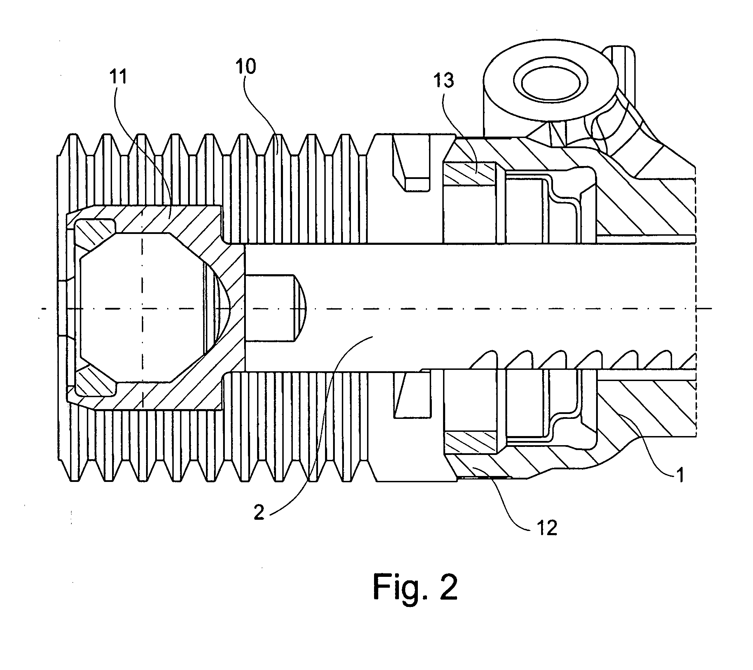

Die Figur 2 zeigt das Lenkungsgehäuse 1 und die Zahnstange 2 im Bereich der Faltenbalganbindung. Das Lenkungsgehäuse 1 trägt dort einen Faltenbalg 10, der das an sich offene Lenkungsgehäuse 1 gegenüber der Atmosphäre verschließt. Der Faltenbalg 10 umgibt ein Spurstangengelenk 11, das endseitig an der Zahnstange 2 angebracht ist. Ein rohrförmig offenes Ende 12 des Lenkungsgehäuses 1 trägt diesen Faltenbalg 10 an der genannten Stelle. Ein Ring 13 ist hier innen in dem rohrförmigen Ende 12 angeordnet. Der Ring 13 ist aus einem Kunststoffmaterial mit eingearbeitetem VCI-Material gefertigt. Er kann an dieser Stelle in gleicher Weise die innerhalb des Lenkungsgehäuses 1 und des Faltenbalgs 10 eingeschlossene Atmosphäre mit VCI-Material in der Dampfphase anreichern und dadurch einen Korrosionsschutz bewirken. Der Ring 13 ist im Spritzgussverfahren hergestellt, ähnlich wie die Buchse 6. An die mechanischen Eigenschaften sind hier keine besonderen Anforderungen zu stellen. Der Ring 13 soll in einem Presssitz in dem rohrförmigen Ende 12 sitzen.

Bei dieser Ausführungsform ist die Möglichkeit des Austausches des Rings 13 vorteilhaft gegeben. Hierzu kann der Ring 13 federelastisch nach Art eines Sicherungsringes in das Lenkungsgehäuse 1 eingesetzt sein. Dies kann besonders bei einer Beschädigung des Faltenbalgs zweckmäßig sein, wenn durch die Beschädigung die Korrosionsschutzatmosphäre innerhalb des Lenkungsgehäuses entweichen kann und die Beschädigung so lange vorliegt, dass der Ring seinen volatilen Anteil an VCI-Material verliert. Es ist bei dieser Ausführungsform besonders einfach, nach Entfernen des beschädigten Faltenbalgs und vor der Montage des Ersatzteils des Ring 13 aus dem rohrförmigen Ende 12 herauszunehmen und gegen einen neuen Ring 13 zu tauschen. Der Korrosionsschutz in dem Lenkungsgehäuse ist dann wieder im Ursprungszustand.

Im Rahmen der Erfindung können auch andere Bauelemente der Lenkung als Spritzgussteil mit VCI-Material ausgeführt sein. Die beiden dargestellten Ausführungsbeispiele zeigen Verwendungen von zusätzlichen Teilen, die besonders einfach gestaltet sind und an Stellen innerhalb des Lenkungsgehäuses 1 eingesetzt werden, in denen freier Bauraum zur Verfügung steht. Weitere Korrosionsschutzkomponenten können aber auch in Form von Unterlegscheiben, Distanzstücken oder anderen aus Spritzguss zu fertigen Kuststoffbauelementen bestehen.

### Bezugszeichenliste

1. Lenkungsgehäuse
2. Zahnstange
3. Ritzel
4. Lenkspindel
5. Drehmomentsensor
6. Kunststoffbuchse
7. Wellendichtringe
10.Faltenbalgs
11.Spurstangengelenk
12. Rohrförmiges offenes Ende
13. Ring

## Patentansprüche

1. Elektrisch angetriebene oder unterstützte Lenkung mit einem Lenkungsgehäuse (1), einem in dem Lenkungsgehäuse (1) angeordneten Elektromotor und einem Getriebe (2, 3),
**dadurch gekennzeichnet , dass** im Innenraum der Lenkung ein Kunststoff-Spritzgussteil (6, 13) angeordnet ist, das mit einem VCI-Material ausgestattet ist.

2. Lenkung nach Anspruch 1, **dadurch**
**gekennzeichnet , dass** das Kunststoff-Spritzgussteil (6, 13) eine an sich vorhandene Komponente der Lenkung ist.

3. Lenkung nach einem der vorhergehenden Ansprüche,
**dadurch gekennzeichnet , dass** das Kunststoff-Spritzgussteil (6, 13) eine Kunststoffhülse, ein Distanzstück oder ein Befestigungselement ist.

4. Lenkung nach einem der vorhergehenden Ansprüche,
**dadurch gekennzeichnet , dass** das Kunststoff-Spritzgussteil (6, 13) eine Unterlegscheibe oder ein Passstück ist.

5. Lenkung nach einem der vorhergehenden Ansprüche,
**dadurch gekennzeichnet , dass** das Kunststoff-Spritzgussteil (6, 13) ein funktionswesentliches Element, insbesondere eine Lagerschalen eines Kugelgelenks oder eine Grundplatten für die Montage eines Sensors ist.

6. Lenkung nach einem der vorhergehenden Ansprüche,
**dadurch gekennzeichnet, dass** das Kunststoff-Spritzgussteil (13) nahe einem rohrförmigen Ende (12) des Lenkungsgehäuses (1) angeordnet ist.

7. Lenkung nach Anspruch 6, **dadurch**
**gekennzeichnet , dass** das Kunststoff-Spritzgussteil (13) ein eingesetzter federelastischer Ring ist.

8. Lenkung nach einem der vorhergehenden Ansprüche,
**dadurch gekennzeichnet, dass** das Kunststoff-Spritzgussteil (6, 13) gemeinsam mit einem Faltenbalg (10) auswechselbar ist.

## Claims

1. Electrically driven or supported steering system, with a steering housing (1), an electric motor disposed in the steering housing (1), and a gear (2, 3), **characterised in that**, a plastic injection-moulded component (6, 13) provided with a VCI material is disposed in the interior of the steering system.

2. Steering system according to claim 1, **characterised in that** the plastic injection-moulded component (6, 13) is a part of the steering system that is present per se.

3. Steering system according to one of the above claims **characterised in that** the plastic injection-moulded component (6, 13) is a plastic sleeve, a spacer piece or a securing element.

4. Steering system according to one of the above claims, **characterised in that** the plastic injection-moulded component (6, 13) is a washer or an adapter.

5. Steering system according to one of the above claims, **characterised in that** the plastic injection-moulded component (6, 13) is a functionally significant element, in particular a shell of a ball and socket joint or a base plate for mounting a sensor.

6. Steering system according to one of the above claims, **characterised in that** the plastic injection-moulded component (13) is disposed close to a tubular (12) end of the steering housing (1).

7. Steering system according to claim 6, **characterised in that** the plastic injection-moulded component (13) is an inserted resilient ring.

8. Steering system according to one of the above claims, **characterised in that** the plastic injection-moulded component (6, 13) is replaceable together with a bellows (10).

## Revendications

1. Direction à entraînement ou assistance électrique comprenant un boîtier de direction (1), un moteur électrique disposé dans le boîtier de direction (1) et un mécanisme (2, 3), **caractérisée en ce qu'**une pièce moulée par injection en matière plastique (6, 13), pourvue d'un matériau VCI (inhibiteur de corrosion volatil), est disposée à l'intérieur de la direction.

2. Direction selon la revendication 1, **caractérisé en ce que** la pièce moulée par injection en matière plastique (6, 13) est en soi un composant existant de la direction.

3. Direction selon une des revendications précédentes, **caractérisée en ce que** la pièce moulée par injection en matière plastique (6, 13) est une douille en matière plastique, un embout de positionnement ou un élément de fixation.

4. Direction selon une des revendications précédentes, **caractérisée en ce que** la pièce moulée par injection en matière plastique (6, 13) est une rondelle d'appui ou un pièce d'ajustage.

5. Direction selon une des revendications précédentes, **caractérisée en ce que** la pièce moulée par injection en matière plastique (6, 13) est un élément important pour le fonctionnement, en particulier un coussinet d'une articulation à rotule ou une plaque de base pour le montage d'un capteur.

6. Direction selon une des revendications précédentes, **caractérisée en ce que** la pièce moulée par injection en matière plastique (13) est agencée proche d'une extrémité tubulaire (12) du boîtier de direction (1).

7. Direction selon la revendication 6, **caractérisée en ce que** la pièce moulée par injection en matière plastique (13) est un anneau inséré étant résilient.

8. Direction selon une des revendications précédentes, **caractérisée en ce que** la pièce moulée par injection en matière plastique (6, 13) est remplaçable ensemble à un soufflet de protection (10).
